# EUROPÄISCHE PATENTSCHRIFT

(11) **EP 0 860 318 B1**
(45) Veröffentlichungstag und Bekanntmachung des Hinweises auf die Patenterteilung: **11.10.2006**
(21) Anmeldenummer: 98102468.0
(22) Anmeldetag: 13.02.1998
(51) Int. Cl.: B60N 2/44

(54) **Schonbezug für Kraftfahrzeugsitze**
Cover for motor vehicle seats
Housse pour sièges de véhicules automobiles

(30) Priorität: 20.02.1997 AT 28697; 29.04.1997 AT 27197
(43) Veröffentlichungstag der Anmeldung: 26.08.1998
(73) Patentinhaber: Walser, Hans-Karl, 6845 Hohenems (AT)
(72) Erfinder: Walser, Hans-Karl, 6845 Hohenems (AT)
(74) Vertreter: Hefel, Herbert

(56) Entgegenhaltungen:
- EP-A- 0 362 149
- EP-A- 0 494 583
- DE-U- 29 620 382
- GB-A- 346 981
- US-A- 1 544 141
- US-A- 1 861 455
- US-A- 2 817 391
- US-A- 3 008 154
- US-A- 3 892 440
- US-A- 4 232 898
- US-A- 4 396 227
- US-A- 4 693 511
- US-A- 5 265 933

## Beschreibung

Die Erfindung bezieht sich auf einen Schonbezug für Kraftfahrzeugsitze mit den Merkmalen des Oberbegriffes des Patentanspruches 1.

Schonbezüge für Kraftfahrzeugsitze sind in vielen unterschiedlichen Formen bekanntgeworden (EP 494 583 B1; EP 362 149 A2; US 3892 440 A; US 2 817 391; DE 296 20 382 U1; GB 346 981). Diese unterschiedlichen Formen sind darauf zurückzuführen, daß die Kraftfahrzeugsitze sehr unterschiedlich gestaltet sind. Der Schonbezug soll am Kraftfahrzeugsitz bzw. an dessen Teilen anlegen und auch bei häufiger Benutzung des Fahrzeugsitzes nicht verrutschen und Falten bilden, was ja nicht nur das Aussehen beeinträchtigt, sondern auch den Sitzkomfort.

Ein Schonbezug mit den Merkmalen des Oberbegriffs des Patentanspruchs 1 ist aus der US-A-1,861,455 bekannt. Bei diesem Schonbezug erstreckt sich der rückseitige Abschnitt des die Lehne aufnehmenden Teils nur über den oberen Bereich der Lehne und ist über seine gesamte Höhe mit dem vorderen Abschnitt des die Lehne aufnehmenden Teils verbunden, wodurch sich eine sackartige Ausgestaltung zur Aufnahme der Lehne etwa über ihre halbe Höhe ergibt. Der vordere Abschnitt des die Lehne aufnehmenden Teils erstreckt sich über die gesamte Höhe der Lehne über den Bereich der Flanken der Lehne. Der aus dieser Schrift bekannte Schonbezug besitzt nur ein begrenztes Anpassungsvermögen an unterschiedliche gestaltete Kraftfahrzeugsitze und hält nicht ausreichend Freiräume für den Austritt von verstellbaren Hebeln, Verstellknebeln, eventuell für eine Armlehne oder für den Austritt von Airbags im Crash-Fall frei.

Ausgehend von diesem Stand der Technik zielt die Erfindung darauf ab, einen Schonbezug vorzuschlagen, der ein sehr hohes Anpassungsvermögen an sehr unterschiedlich gestaltete Kraftfahrzeugsitze besitzt. Des weiteren soll der Schonbezug so ausgestaltet sein, daß er hinreichend Freiräume offenhält für den Austritt von verstellbaren Hebeln, von Verstellknebeln, evtl. für eine Armlehne oder auch für den Austritt von Airbags im Crash-Fall. Die Erfindung löst diese komplexe Aufgabe durch jene Merkmale, die Gegenstand und Inhalt des kennzeichnenden Teiles des Anspruches 1 sind. Zweckmäßige Ausgestaltungen der Erfindung sind in den Unteransprüchen festgehalten.

Das Gummiband durchläuft den tunnelartigen, durch eine elastische Naht gerafften Bund, ohne mit diesem verbunden zu sein. Die endseitig am tunnelartigen Bund vorgesehenen Schlaufen dienen zur zusätzlichen Sicherung und Halterung, mit welchen der rückseitige Abschnitt des Schonbezuges mit dem Fahrzeugsitz verspannbar ist.

Ausführungsbeispiele der Erfindung werden anhand der Zeichnung näher erläutert, ohne die Erfindung einzuschränken. Es zeigen:
- Fig. 1: einen Schonbezug für einen Kraftfahrzeugsitz in Schrägsicht;
- Fig. 2: den Schonbezug nach Fig. 1 in Seitensicht;
- Fig. 3: den Schonbezug nach Fig. 1 und 2 von hinten;
- die Fig. 4 und 5: sind Detaildarstellungen in einem gegenüber den anderen Figuren erheblich vergrößerten Maßstab;
- Fig. 6: eine weitere Ausgestaltung eines Schonbezuges in der Darstellung nach Fig. 1.

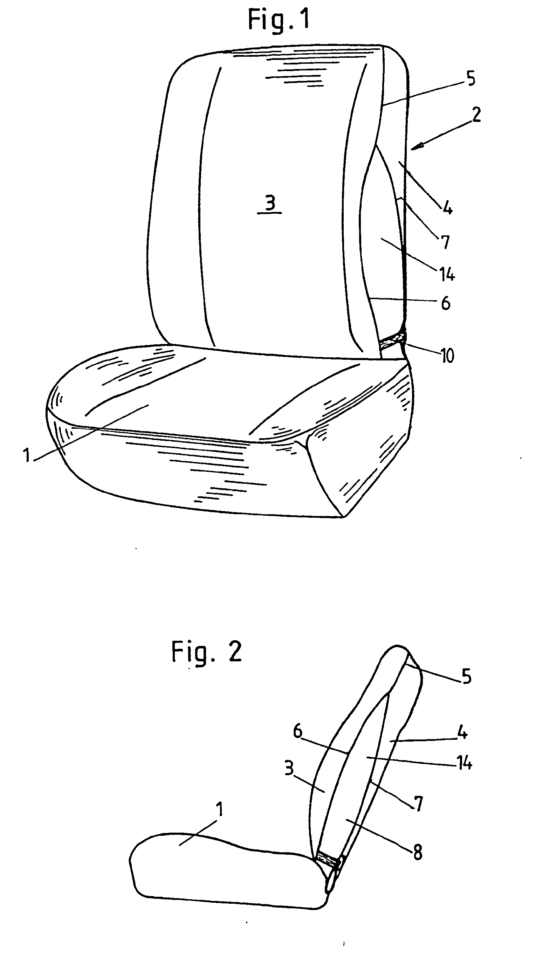

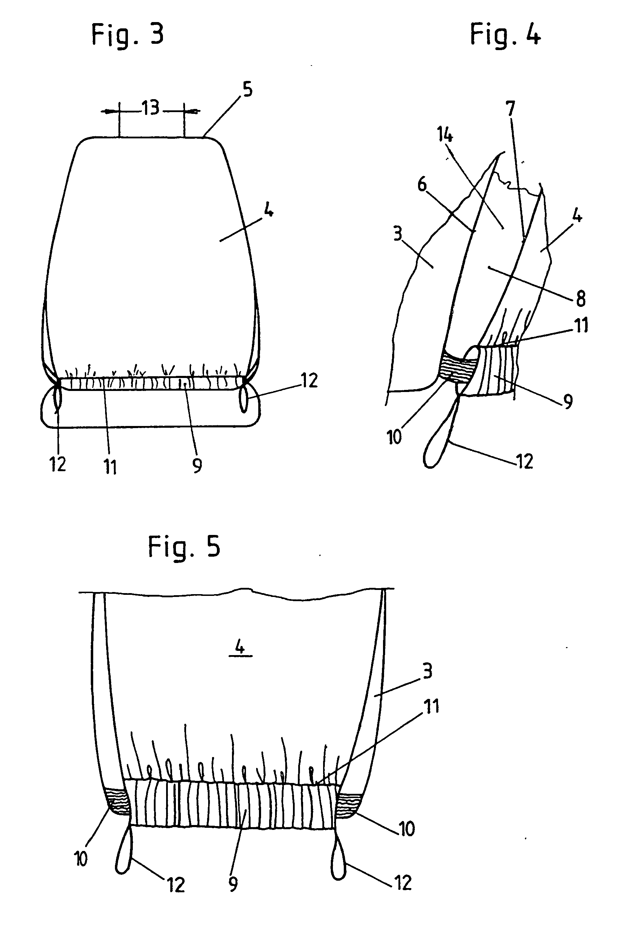

Der an einem Kraftfahrzeugsitz angeordnete Schonbezug, in Fig. 1 in Schrägsicht dargestellt, besitzt einen ersten Teil 1, der den Sitz des Kraftfahrzeugsitzes bedeckt und diesen randseitig umschließt. Des weiteren besitzt dieser Schonbezug einen die Lehne 14 des Kraftfahrzeugsitzes umschließenden Teil 2. Dieser Teil 2 des Schonbezuges hat einen vorderen Abschnitt 3, der die Lehne des Kraftfahrzeugsitzes und auch noch einen Teil der seitlichen Flanken derselben bedeckt, und einen rückseitigen Abschnitt 4, von dem in Fig. 1 nur ein geringer Teil zu sehen ist. Dieser rückseitige Abschnitt 4 - Fig. 2 und Fig. 3 - erstreckt sich im wesentlichen über die gesamte Höhe der Lehne des Kraftfahrzeugsitzes und ist mit dem vorderen Abschnitt 3 nur im oberen Bereich über eine Naht 5 verbunden, so daß über den restlichen Teil der Höhe der Lehne 14 die Ränder 6 und 7 dieser beiden Abschnitte 3 und 4 einen mehr oder weniger offenen Spalt begrenzen. In diesem offenen Spalt kann gegebenenfalls die in der Lehne des Kraftfahrzeugsitzes vorgesehene Austrittsöffnung eines hier untergebrachten Seiten-Airbags liegen. Des weiteren können durch diesen von den Rändern 6 und 7 begrenzten Spalt beispielsweise Verstellorgane wie Hebel oder Knebel ragen, die zur Lösung eines Sperrmechanismus dienen, der die Lehne in aufrechter Lage hält oder mit welchen eine in der Lehne eingebaute Lordosenstütze verstellbar ist. Auch eine Armlehne bzw. deren Verbindungsbeschlag kann hier vorgesehen sein.

Der untere Rand dieses rückseitigen Abschnittes 4 ist als tunnelartiger Bund 9 zum Durchziehen eines Gummibandes 10 ausgebildet. Dieser tunnelartige, gegebenenfalls umgeschlagene Bund 9 ist durch eine elastische Naht 11 gerafft ausgebildet. An den Enden dieses Bundes 10 sind Schlaufen 12 befestigt, mit welchen dieser rückseitige Abschnitt 4 gegenüber dem Kraftfahrzeugsitz abspannbar ist.

Die beiden den tunnelartigen Bund 9 beidseitig überragenden Enden des Gummibandes 10 sind am unteren Bereich des vorderen Abschnittes 3 des die Lehne aufnehmenden Teiles 2 angenäht. Zumindest die Stoffbahn des rückseitigen Abschnittes 4 ist aus einem elastisch dehnbaren Material gefertigt. Das Gummiband 10 durchläuft den tunnelartigen Bund, ohne mit diesem verbunden zu sein, wenn von einer Haftstelle im Mittelbereich des Bundes abgesehen wird, die dieses Gummiband 10 vor Verlust schützt.

Die Naht 5, die oben den vorderen und rückseitigen Abschnitt 3 und 4 verbindet, kann im Mittelbereich 13 unterbrochen sein für den Durchtritt einer an der Lehne vorgesehenen, in Fig. 1 nicht dargestellten Kopfstütze.

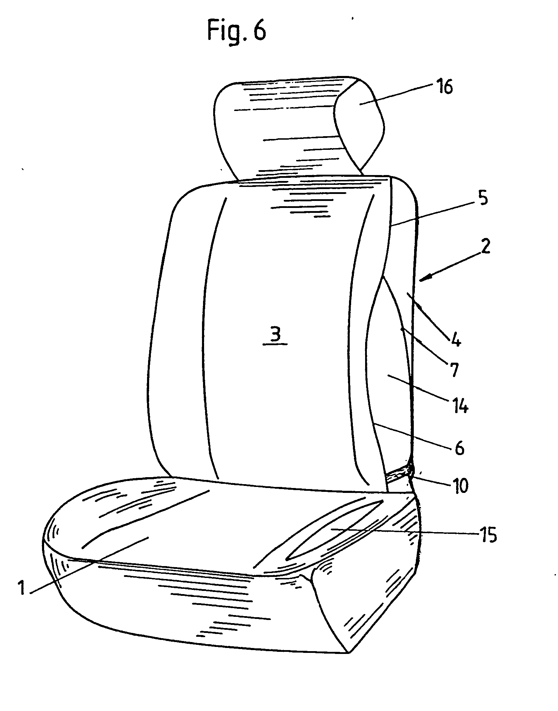

Fig. 6 zeigt in der Art der Darstellung nach Fig. 1 einen Kraftfahrzeugsitz mit einem Schonbezug und einer Kopfstütze 16. Bei diesem Schonbezug nach Fig. 6 ist in dem an einer der seitlichen Wangen der Sitzfläche anliegenden Teil 1 eine schlitzartige, sich in Längsrichtung des Sitzes erstreckende Öffnung 15 vorgesehen, und diese Öffnung 15 ist an der für einen Seiten-Airbag vorgesehenen, hier nicht sichtbaren Austrittsstelle des Kraftfahrzeugsitzes angeordnet. Diese Öffnung 15 kann abdeckbar, gegebenenfalls verschließbar sein. Zur Abdeckung bzw. Verschließung dieser Öffnung 15 ist ein zur Umfangskontur derselben korrespondierend ausgebildetes Tuchstück vorgesehen, wobei die Ränder des Tuchstückes und der Öffnung vorzugsweise mittels Klettbändern miteinander verbindbar sind. Diese Öffnung 15 erstreckt sich über ca. 2/3 der Sitztiefe der Sitzfläche. Auch der Teil 1 bzw. Abschnitte desselben können aus elastischem Textilmaterial gefertigt sein.

Dank der geschilderten Ausbildung des Schonbezuges ist dieser für Kraftfahrzeugsitze sehr unterschiedlicher Bauarten verwendbar und an diese anpaßbar, wobei dafür Sorge getragen ist, daß eventuelle Airbags ungehindert austreten können bzw. Verstellhebel oder Verstellknebel unbehindert zugänglich sind.

### Legende

### zu den Hinweisziffern:

- 1: Teil
- 2: Teil
- 3: vorderer Abschnitt
- 4: rückseitiger Abschnitt
- 5: Naht
- 6: Rand
- 7: Rand
- 8: Spalt
- 9: Bund
- 10: Gummiband
- 11: Naht
- 12: Schlaufe
- 13: Mittelbereich
- 14: Lehne
- 15: Öffnung
- 16: Kopfstütze

## Patentansprüche

1. Schonbezug für Kraftfahrzeugsitze mit einem Sitz und einer Lehne (14), wobei der Schonbezug einen den Sitz bedeckenden und seitlich umschließenden Teil (1) aufweist und einen die Lehne (14) aufnehmenden Teil (2) mit einem vorderen und einem rückseitigen Abschnitt (3, 4), wobei der untere Rand des rückseitigen Abschnittes (4) als tunnelartiger Bund (9) zum Durchziehen eines Bandes (10) ausgebildet ist und die beiden den tunnelartigen Bund (9) beidseitig überragenden Enden des als Gummiband ausgebildeten Bandes (10) unmittelbar und direkt am vorderen Abschnitt (3) des die Lehne (14) aufnehmenden Teiles (2) festgemacht sind, **dadurch gekennzeichnet, daß** der sich im wesentlichen über die gesamte Höhe der Lehne (14) erstreckende rückseitige Abschnitt (4) des die Lehne (14) aufnehmenden Teils (2) nur in seinem oberen Bereich mit dem vorderen Abschnitt (3) verbunden ist und die Enden des Bandes (10) am unteren Bereich des vorderen Abschnitts (3) des die Lehne (14) aufnehmenden Teils (2) festgemacht sind und daß der tunnelartige Bund (9) mittels einer gummielastischen Naht (11) gerafft ausgebildet ist und zumindest der rückseitige Abschnitt (4) des die Lehne (14) umschließenden Teiles (2) aus einem dehnbaren Material gefertigt ist.

2. Schonbezug nach Anspruch 1, **dadurch gekennzeichnet, daß** endseitig am tunnelartig umgeschlagenen Bund (9) Schlaufen (12) befestigt sind.

3. Schonbezug nach Anspruch 1, **dadurch gekennzeichnet, daß** die Ränder (6, 7) der Abschnitte (3, 4) eine im wesentlichen linsenförmige, im Bereich der Flanke der Lehne (14) liegende Öffnung begrenzen.

4. Schonbezug nach Anspruch 1, **dadurch gekennzeichnet, daß** zumindest in dem an einer der seitlichen Wangen der Sitzfläche anliegenden Teil (1) des Schonbezuges eine schlitzartige, sich in Längsrichtung des Sitzes erstrekkende Öffnung (15) vorgesehen ist und diese Öffnung (15) an der für einen Seiten-Airbag vorgesehenen Austrittsstelle des Kraftfahrzeugsitzes angeordnet ist.

5. Schonbezug nach Anspruch 4, **dadurch gekennzeichnet, daß** die Öffnung abdeckbar, gegebenenfalls verschließbar ist.

6. Schonbezug nach Anspruch 5, **dadurch gekennzeichnet, daß** zur Abdeckung bzw. Verschließung der Öffnung (15) ein zur Umfangskontur derselben korrespondierend ausgebildetes Tuchstück vorgesehen ist, wobei die Ränder des Tuchstückes und der Öffnung vorzugsweise mittels Klettbändern miteinander verbindbar sind.

7. Schonbezug nach Anspruch 4, **dadurch gekennzeichnet, daß** sich die Öffnung über ca. 2/3 der Sitztiefe der Sitzfläche erstreckt.

8. Schonbezug nach Anspruch 3, **dadurch gekennzeichnet, daß** sich die von den Rändern (6, 7) begrenzte Öffnung über ca. 2/3 der Höhe der Lehne (14) erstreckt.

9. Schonbezug nach einem der Ansprüche 1 bis 8, **dadurch gekennzeichnet, daß** der rückseitige Abschnitt (4) des die Lehne (14) aufnehmenden Teils (2) in seinem oberen Bereich über eine Naht (5) mit dem vorderen Abschnitt (3) verbunden ist.

## Claims

1. A protective cover for motor vehicle seats with a seat and a backrest (14), wherein the protective cover has a part (1) which covers the top and surrounds the sides of the seat, and a part (2) which contains the backrest (14) and has a front and a rear portion (3, 4), wherein the lower edge of the rear portion (4) is formed as a tubular band (9), through which a tape (10) passes, and the two ends of the tape (10), which is formed as an elastic tape, are fastened directly to the front portion (3) of the part (2) containing the backrest (14), said ends projecting beyond the tubular band (9) on both sides, **characterised in that** the rear portion (4) of the part containing the backrest (14) extends substantially over the entire height of the backrest (14) and is connected to the front portion (3) only in its upper region, and the ends of the tape (10) are fastened to the lower region of the front portion (3) of the part (2) containing the backrest (14), and **in that** the tubular band (9) is gathered by means of an elastic seam (11), and at least the rear portion (4) of the part (2) surrounding the backrest (14) is made of a stretch material.

2. A protective cover according to claim 1, **characterised in that** loops (12) are fixed to the ends of the tubular band (9).

3. A protective cover according to claim 1, **characterised in that** the edges (6, 7) of the portions (3, 4) define a substantially lenticular opening lying in the region of the flank of the backrest (14).

4. A protective cover according to claim 1, **characterised in that** a slit-type opening (15) extending in the longitudinal direction of the seat is provided at least in the part (1) of the protective cover adjacent to one of the side walls of the seat surface, and this opening (15) is arranged at the outlet point provided in the motor vehicle seat for a side air bag.

5. A protective cover according to claim 4, **characterised in that** the opening can be covered, optionally closed.

6. A protective cover according to claim 5, **characterised in that** a piece of cloth is provided for covering or closing the opening (15) and is complementary to the circumferential contour thereof, wherein the edges of the piece of cloth and the opening are connectable to one another preferably by means of hook-and-loop fastening strips.

7. A protective cover according to claim 4, **characterised in that** the opening extends over approximately ²/₃ of the depth of the seat surface.

8. A protective cover according to claim 3, **characterised in that** the opening defined by the edges (6, 7) extends over approximately 2/3 of the height of the backrest (14).

9. A protective cover according to any one of claims 1 to 8, **characterised in that** the rear portion (4) of the part (2) containing the backrest (14) is connected in its upper region to the front portion (3) by a seam (5).

## Revendications

1. Housse pour sièges de véhicules automobiles comprenant un siège et un dossier (14), la housse présentant une partie (1) recouvrant le siège et l'entourant sur les côtés et une partie (2) recevant le dossier (14) avec une section avant (3) et une section arrière (4), le bord inférieur de la section arrière (4) formant un tunnel (9) pour faire passer un ruban (10) dont chacune des deux extrémités, dépasse du tunnel (9), le ruban (10) étant une bande élastique, aux extrémités directement fixées à la section avant (3) de la partie (2) recevant le dossier (14),
**caractérisée en ce que**
la section arrière (4), de la partie (2) recevant le dossier (14), s'étendant sur toute la hauteur du dossier (14), est reliée uniquement par sa partie supérieure à la section avant (3) et les extrémités du ruban (10) sont fixées à la partie inférieure de la section avant (3) de la partie (2) recevant le dossier (14) et le tunnel (9) est plissé par une couture (11) en caoutchouc élastique et la section arrière (4) de la partie (2) entourant le dossier (14) est en étoffe extensible.

2. Housse selon la revendication 1,
**caractérisée par**
des cordons de coulisse (12) aux extrémités du tunnel.

3. Housse selon la revendication 1,
**caractérisée en ce que**
les bords (6, 7) des sections (3, 4) délimitent une ouverture essentiellement ovale, sur le flanc du dossier (14).

4. Housse selon la revendication 1,
**caractérisée en ce qu'**
dans la partie (1), de la housse, recouvrant l'une des joues latérales du siège, une fente (15) s'étendant longitudinalement au siège est disposée point de sortie prévu pour un airbag latéral.

5. Housse selon la revendication 4,
**caractérisée en ce que**
la fente (15) peut être recouverte, le cas échéant fermée.

6. Housse selon la revendication 5,
**caractérisée en ce qu'**
une pièce d'étoffe correspondant au contour de la fente (15) la recouvre ou la ferme et leurs bords sont de préférence reliés par des bandes Velcro.

7. Housse selon la revendication 4,
**caractérisée en ce que**
la fente (15) s'étend sur environ les 2/3 de la profondeur de siège.

8. Housse selon la revendication 3,
**caractérisée en ce que**
l'ouverture délimitée par les bords (6, 7) s'étend sur environ les 2/3 de la hauteur du dossier (14).

9. Housse selon l'une des revendications 1 à 8,
**caractérisée en ce que**
la section arrière (4) de la partie (2) recevant le dossier (14) est cousue dans sa partie supérieure, à la section avant (3) par une couture (5).
